# EUROPÄISCHE PATENTSCHRIFT

(11) **EP 3 722 573 B1**
(45) Veröffentlichungstag und Bekanntmachung des Hinweises auf die Patenterteilung: **20.08.2025**
(21) Anmeldenummer: 20156280.8
(22) Anmeldetag: 10.02.2020
(51) Int. Cl.: F02B 37/18, F02B 37/04, F02B 37/24, F02B 39/10, F02D 41/00, F02D 41/14, F02B 25/14, F02D 13/02

(54) **VERFAHREN ZUM BETREIBEN EINER VERBRENNUNGSKRAFTMASCHINE MIT EINEM ABGASTURBOLADER UND EINEM ELEKTRISCH ANGETRIEBENEN VERDICHTER UND VORRICHTUNGEN DAVON**
METHOD FOR OPERATING A COMBUSTION ENGINE WITH AN EXHAUST GAS TURBOCHARGER AND AN ELECTRICALLY DRIVEN COMPRESSOR AND DEVICES THEREOF
PROCÉDÉ DE FONCTIONNEMENT D'UN MOTEUR À COMBUSTION INTERNE DOTÉ D'UN TURBOCOMPRESSEUR À GAZ D'ÉCHAPPEMENT ET D'UN COMPRESSEUR ALIMENTÉ ÉLECTRIQUEMENT ET SES DISPOSITIFS

(30) Priorität: 09.04.2019 DE 102019205044
(43) Veröffentlichungstag der Anmeldung: 14.10.2020
(73) Patentinhaber: VOLKSWAGEN AG, 38440 Wolfsburg (DE)
(72) Erfinder: Heinken, Sebastian, 38106 Braunschweig (DE); Bartolome, Javier, 38102 Braunschweig (DE); Frese, Florian, 38104 Braunschweig (DE); Keich, Sebastian, 38114 Braunschweig (DE)
(74) Vertreter: MFG Patentanwälte Meyer-Wildhagen Meggle-Freund Gerhard PartG mbB

(56) Entgegenhaltungen:
- EP-A1- 1 816 326
- WO-A1-03/027464
- DE-A1- 102012 009 288
- DE-A1- 102013 008 826
- JP-A- 2015 124 681

## Beschreibung

Die Erfindung betrifft ein Verfahren zum Betreiben eines Verbrennungsmotors, eine Steuerung, ein Verbrennungsmotor und ein Kraftfahrzeug.

Allgemein sind Aufladungssysteme für Verbrennungsmotoren, insbesondere im Kraftfahrzeugbereich, bekannt, um Zylinder der Verbrennungsmotoren mit Luft mit Überdruck für die Verbrennung von Kraftstoff zu versorgen.

Zur Bereitstellung der Luft mit Überdruck sind bspw. Turbolader und Kompressoren bekannt. Turbolader haben einen Verdichter und sie können mit einem eigenen Antrieb für den Verdichter ausgestattet sein, z.B. einem Elektromotor, oder sie werden z.B. mit Abgas des Verbrennungsmotors betrieben, wobei das Abgas eine Turbine antreibt, die über eine Welle mit dem Verdichter wirkverbunden/gekoppelt ist. Letztere werden auch als Abgasturbolader bezeichnet.

Ferner sind Turbolader mit einem Bypassventil, auch Wastegate genannt, und/oder solche mit variabler Turbinengeometrie bekannt, die verstellbare, nicht rotierende Leitschaufeln aufweisen. Durch Verstellung des Anstellwinkels der Leitschaufeln kann der Gasdurchsatz verändert werden. Typischerweise wird der Anstellwinkel der Leitschaufeln so eingestellt, dass bei wenig Gasdurchsatz und hohem Leistungsbedarf die Leistung des Turboladers durch Verringerung des Strömungsquerschnitts erhöht und bei hohem Gasdurchsatz und niedrigem Leistungsbedarf durch Vergrößerung des Strömungsquerschnitts erhöht wird. Allerdings ist bspw. aus DE 10 2014 210 026 A1 bekannt, dass ein starkes Zuziehen der Leitschaufeln typischerweise auch zu einem hohen Abgasgegendruck und damit zu Ladungswechselverlusten führt, was wiederum einem Effektivmomentenaufbau einer Verbrennungskraftmaschine entgegenwirkt.

Es sind auch Abgasturbolader mit Hilfsantrieben bekannt, wie beispielsweise aus DE 10 2014 221 331 A1. Hier ist ein Hilfsantrieb auf einer Welle des Abgasturboladers vorgesehen und wird in Abhängigkeit einer momentanen Turbinengeometrie gesteuert und im Bedarfsfall zugeschaltet und betrieben, wenn z.B. die variable Turbinengeometrie wirkungsgradoptimiert eingestellt ist, aber nicht genügend Antriebsleitung für den Verdichter zur Verfügung steht.

Aus DE 10 2016 121 287 A1 und DE 10 2014 208 092 A1 ist ebenfalls bekannt, zusätzlich zu einem Abgasturbolader einen elektrisch betriebenen Verdichter zur Aufladung einer Brennkraftmaschine vorzusehen. Gemäß DE 10 2014 208 092 A1 wird der elektrisch betriebene Verdichter primär betätigt, wenn genügend bzw. sogar überschüssige elektrische Energie zu dessen Betrieb zur Verfügung steht. Dadurch wird Ladeluft primär mittels des elektrisch betriebenen Verdichters verdichtet und eine Regeleinrichtung des Abgasturboladers, z.B. eine variable Turbinengeometrie oder ein Wastegate, können derart eingestellt werden, um einen Abgasgegendruck im Abgasturbolader zu verringern. Dadurch ist eine geringere Ladungswechselarbeit möglich und entsprechend ein geringerer Kraftstoffverbrauch der Brennkraftmaschine.

EP 1 816 326 A1 beschreibt Verfahren zur Steuerung eines Aufladesystems, das in der Lage ist, Ansaugluft in einen Verbrennungsmotor mit einer ersten und einer zweiten Pumpkapazität zu fördern und eine Turbine umfasst, die Abgase des Motors durch einen Strömungswiderstand aufnimmt und die erste Pumpkapazität erzeugt. Das Verfahren umfasst die Reduzierung des Strömungswiderstands und die Erhöhung der zweiten Pumpkapazität, wenn der gewünschte Ansaugluftstrom des Motors zunimmt.

Wie oben erwähnt kann der Einsatz einer VTG zu hohen Abgasgendrücken führen, die Ladungswechsel innerhalb der Zylinder verschlechtern. Hier ist das Spülgefälle (Differenz zwischen Saugrohrdruck und Druck im Abgaskrümmer) eine charakteristische Größe für den Grad für das Rückfließen von Abgas in den Brennraum. Ist dieses Spülgefälle negativ strömt während des Ladungswechsels ein gewisser Anteil an Abgas in den Brennraum zurück und reduziert damit das mögliche Volumen für Frischluft. Das kann in stationärer Teillast durchaus gewollt sein, um die Frischluftseite zu entdrosseln und damit den motorischen Wirkungsgrad zu erhöhen. In der positiven Motordynamik ist jedoch ein maximales Maß an Luft im Brennraum notwendig, um ein möglichst schnellen Momentenaufbau darstellen zu können.

Grundsätzlich sind Verfahren zum Steuern/Betreiben von Verbrennungsmotoren mit Aufladungssystemen, die einen Abgasturbolader und einen elektrisch angetriebenen Verdichter aufweisen, bekannt. Die Aufgabe der vorliegenden Erfindung ist es, ein verbessertes Verfahren zum Steuern/Betreiben eines Verbrennungsmotors mit einem derartigen Aufladungssystem bereitzustellen, bei dem die bekannten Nachteile wenigstens teilweise ausgeräumt werden können.

Diese Aufgabe wird durch das erfindungsgemäße Verfahren nach Anspruch 1, das Steuergerät nach Anspruch 8, den Verbrennungsmotor nach Anspruch 9 und das Kraftfahrzeug nach Anspruch 10 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der vorliegenden Offenbarung betrifft ein Verfahren zum Betreiben eines Verbrennungsmotors mit einem Aufladungssystem, das einen Abgasturbolader (ATL) und einen elektrisch angetriebenen Verdichter aufweist, wobei eine Leistung des ATLs über eine Stelleinrichtung einstellbar ist, wobei das Verfahren umfasst:
- Ermitteln eines Soll-Ladedrucks zum Erreichen eines erhöhten Motor-Sollmoments;
- Einstellen des Aufladungssystems zum Aufbauen eines Ist-Ladedrucks gemäß dem Soll-Ladedruck; und
- Einstellen eines positives Spülgefälles in einem Zylinder des Verbrennungsmotors als vorrangige Führungsgröße zum Ansteuern des Aufladungssystems.

Die Begriffe Kontrolle, Einstellen, Ansteuerung, Steuerung, Regelung umfassen im Zusammenhang mit dieser Erfindung sowohl Steuerungen im eigentlichen Sinne (ohne Rückkopplung) als auch Regelungen (mit einem oder mehreren Regelkreisen). Führungsgröße soll daher auch als Sollgröße verstanden werden.

Der Verbrennungsmotor kann beispielsweise ein Otto-Motor sein und vorzugsweise ein MillerMotor.

Das Aufladungssystem weist u.a. einen ATL auf, der einen Verdichter und eine Turbine umfasst, wobei die Leistung des ATLs über die Stelleinrichtung einstellbar ist. Hierbei kann die Stelleinrichtung eine eingangs erwähnte variable Turbinengeometrie (VTG) umfassen, so dass eine Leistung des ATLs anpassbar ist. Alternativ oder ergänzend kann die Stelleinrichtung ein Wastegate umfassen.

Zusätzlich zum ATL weist das Aufladungssystem den elektrisch angetriebenen Verdichter auf. Dieser kann beispielsweise über eine elektrische Maschine angetrieben werden. Der elektrisch angetriebene Verdichter ist (in einer Luftzufuhrleitung zum Motor) stromabwärts des Verdichters des ATLs angeordnet. Alternativ ist es möglich den elektrisch angetriebenen Verdichter auch stromaufwärts des Verdichters des ATLs anzuordnen.

In einer weiteren Alternative kann der elektrisch angetriebene Verdichter der Verdichter des ATLs sein, wobei die elektrische Maschine mit einer Welle des ATLs, insbesondere direkt, gekoppelt ist. Somit ist die Leistung des ATLs, insbesondere die Leistung des Verdichters des ATLs, einstellbar.

Das erhöhte Motor-Sollmoment kann beispielsweise aus einem Fahrerwunsch abgeleitet werden, der durch eine entsprechende Gaspedalbetätigung durch den Fahrer ausgedrückt wird. Das erhöhte Motor-Sollmoment drückt aus, dass es sich bei dem Fahrerwunsch um einen Beschleunigungswunsch handelt.

Mit Kenntnis des erhöhten Motor-Sollmoments ist ein entsprechender Soll-Ladedruck ermittelbar. Der Soll-Ladedruck kann beispielsweise eine Funktion in Abhängigkeit des Motormoments sein und beispielsweise als mathematisches Modell und/oder Kennfeld bzw. Kennlinie in einem Speicher einer Steuerung, z.B. einem Motorsteuergerät, hinterlegt/abgespeichert sein.

Um den Soll-Ladedruck aufzubauen, wird das Aufladungssystem entsprechend eingestellt. Damit ist gemeint, dass zum einen die Leistung des ATLs über die Stelleinrichtung zum Aufbauen des Ist-Ladedrucks angepasst wird und zum anderen, dass der elektrisch angetriebene Verdichter mit einer entsprechenden Leistung bzw. mit einer entsprechenden Soll-Drehzahl zum Aufbauen des Ist-Ladedrucks betrieben wird, so dass der Soll-Ladedruck erreicht wird. So kann beispielsweise der elektrisch angetriebene Verdichter über eine elektrische Maschine betrieben werden, wobei eine Leistung der elektrischen Maschine und damit die Verdichterleistung anpassbar ist.

Beim Aufbauen des Ist-Ladedrucks wird ein positives Spülgefälle in einem Zylinder des Verbrennungsmotors eingestellt. Der Motor kann jede Anzahl von Zylindern aufweisen, wie z.B. drei, vier, sechs, acht, zwölf oder dergleichen. Hier wird nur exemplarisch das Spülgefälle für einen Zylinder des Motors beschrieben. Mit "Spülgefälle" ist die Druckdifferenz über dem Zylinder gemeint, also die Differenz zwischen einem Saugrohrdruck vor dem Zylinder und dem Druck, der innerhalb eines Abgasleitung des Motors nach dem Zylinder vor der Turbine des ATL anliegt. Letzterer wird in der Regel als "Abgasgegendruck" bezeichnet.

Wie oben erwähnt, wird das Spülgefälle derart eingestellt, dass es positiv wird. Das heißt der Saugrohrdruck soll mindestens gleich und in der Regel größer als der Abgasgegendruck sein.

Das positive Spülgefälle dient als vorrangige Führungsgröße zum Ansteuern des Aufladungssystems. "Vorrangige Führungsgröße" bedeutet hier, dass zunächst das Aufladungssystem derart angesteuert/eingestellt, dass zunächst das positive Spülgefälle in dem Zylinder eingestellt wird und dann der Ist-Ladedruck dem Soll-Ladedruck nachgeführt wird. Das Spülgefälle innerhalb des Zylinders wird also positiv gehalten, während der Ist-Ladedruck dem Soll-Ladedruck nachgeführt wird. "Positiv gehalten" bedeutet, dass das Spülgefälle gleich oder größer als 0 mbar sein soll.

Indem also zunächst das positive Spülgefälle innerhalb des Zylinders eingestellt wird, kann zumindest teilweise verhindert werden, dass während eines Ladungswechsels des Zylinders Abgas in den Zylinder zurückströmt. Dadurch kann besonders gut ein Motormoment aufgebaut werden, da Ladungswechselverluste aufgrund von (in den Zylinder) zurückströmendem Abgas durch das positive Spülgefälle zumindest teilweise, wenn nicht sogar vollständig, vermeidbar sind.

In einer Variante kann die Stelleinrichtung die oben erwähnte variable Turbinengeometrie umfassen. Dadurch ist eine Leistung des ATLs besonders gut anpass-/einstellbar.

Ferner kann das positive Spülgefälle erreicht werden, indem der elektrisch angetriebene Verdichter und der ATL, insbesondere dessen Stelleinrichtung, in Abhängigkeit voneinander - also aufeinander abgestimmt - betrieben werden.

In einer weiteren Variante, die nicht Teil der Erfindung ist, kann das Einstellen des Aufladungssystems in einem ersten Betriebszustand einen Betrieb des elektrisch angetriebenen Verdichters mit einer optimierten Maximalleistung und einen Betrieb der Stelleinrichtung in einer ersten geöffneten Stellung umfassen. Die erste geöffnete Stellung der Stelleinrichtung kann beispielsweise eine weitestgehend geöffnete Stellung umfassen. Alternativ kann die erste geöffnete Stellung auch nur eine kurzzeitig geschlossene Stellung umfassen, die dann in eine weitestgehend geöffnete Stellung übergeht. Die optimierte Maximalleistung ist von einer Kapazität eines Energiespeichers (z.B. Batterie) abhängig, wobei der Energiespeicher die (elektrische) Maschine zum Antreiben des elektrisch angetriebenen Verdichters versorgt. Je nach Kapazität (verfügbarer Leistung) des Energiespeichers kann der elektrisch angetriebene Verdichter verschiedene optimierte Maximalleistungen aufweisen. Anders ausgedrückt, die optimierte Maximalleistung des elektrisch angetriebenen Verdichters ist abhängig von der Kapazität des Energiespeichers.

Der Betrieb der Stelleinrichtung in der ersten geöffneten Stellung bedeutet, dass das aus dem Zylinder ausströmende Abgas die Turbine nur teilweise antreibt. Weist die Stelleinrichtung beispielsweise die VTG auf, so ist in der ersten geöffneten Stellung die VTG so eingestellt, dass ein Strömungsquerschnitt der Turbine zumindest teilweise, und vorzugsweise maximal, geöffnet ist. Weist die Stelleinrichtung hingegen das Wastegate auf, so ist das Wastegate derart eingestellt, dass das aus dem Zylinder ausströmende Abgas die Turbine zumindest teilweise, und vorzugsweise vollständig, über das Wastegate umgeht/-strömt. Durch die erste geöffnete Stellung der Stelleinrichtung kann ein besonders niedriger Abgasgegendruck eingestellt werden. Indem der elektrisch angetriebene Verdichter mit seiner optimierten Maximalleistung betrieben wird und die Stelleinrichtung in ihrer ersten geöffneten Stellung, kann in diesem ersten Betriebszustand des Aufladungssystems das positive Spülgefälle besonders schnell erreicht werden, während die Kapazität des Energiespeichers berücksichtigt wird.

Ferner kann im ersten Betriebszustand beim Erreichen des positiven Spülgefälles in einem zweiten Betriebszustand eine Leistung des ATLs zum Aufbauen des Ist-Ladedrucks und entsprechend die Leistung des elektrisch angetriebenen Verdichters reduziert werden. Mit anderen Worten, sobald das positive Spülgefälle eingestellt ist, wird die Leistung des elektrisch angetriebenen Verdichters entsprechend (und sukzessive) verringert, während parallel dazu die Leistung des ATLs mittels der Stelleinrichtung derart reduziert wird, dass der Ist-Ladedruck weiterhin aufgebaut wird. Insbesondere wird dabei der ATL derart eingestellt/betrieben, dass seine Leistung (insbesondere eine Turbinenleistung) so hoch wie möglich ist, ohne dass das Spülgefälle negativ wird, also der Abgasgegendruck größer als der Saugrohrdruck ist. Durch den zweiten Betriebszustand des Aufladungssystems kann also der Ist-Ladedruckaufbau (sukzessive) vom ATL aufgebaut werden. Entsprechend wird durch die Verringerung der Leistung des elektrisch angetriebenen Verdichters auch der Zugriff auf die Kapazität des Energiespeichers verringert und der Energiespeicher entsprechend geschont.

In einer Variante kann der elektrisch angetriebene Verdichter entsprechend einer ersten Stellgröße betrieben werden und der ATL entsprechend einer zweiten Stellgröße. Hierfür werden über eine (An-)Steuerung/Regelung Sollwerte für die Stellgrößen generiert, um die Anforderungen des Motormomentaufbaus zu erfüllen.

Auch kann die erste Stellgröße anhand eines ersten Reduzierungsfaktors ermittelbar sein und die zweite Stellgröße anhand eines Reduzierungsfaktors. Hierbei stellen die Reduzierungsfaktoren ein Maß dar, um wieviel die Leistung des elektrisch angetriebenen Verdichters und der Stelleinrichtung heruntergesetzt/gedrosselt werden. Für den elektrisch angetriebenen Verdichter entspricht ein hoher erster Reduzierungsfaktor eine (vergleichsweise) niedrigere Leistung. Für die Stelleinrichtung bedeutet ein hoher zweiter Reduzierungsfaktor, dass eine Leistung des ATLs (vergleichsweise) niedriger ist. So entspricht ein hoher Reduzierungsfaktor für die (zweite) Stellgröße der VTG, dass die VTG einen größeren Strömungsquerschnitt aufweist. Ein hoher zweiter Reduzierungsfaktor für die (zweite) Stellgröße des Wastegates bedeutet, dass mehr von dem aus dem Zylinder strömenden Abgas um die Turbine geleitet wird.

So ist in dem ersten Betriebszustand beim Einstellen des Aufladungssystems der erste Reduzierungsfaktor (für den elektrisch angetriebenen Verdichter) zunächst zwischen 20% bis 40% eingestellt, vorzugsweise zischen 25% bis 35%, und besonders bevorzugt auf 30% eingestellt (insbesondere in Abhängigkeit der Kapazität des Energiespeichers) weshalb der elektrisch angetriebene Verdichter mit seiner optimierten Maximalleistung betrieben wird. Hingegen ist der zweite Reduzierungsfaktor (für den ATL bzw. dessen Stelleinrichtung) derart abgestimmt oder gewählt, dass das positive Spülgefälle schnell und unter Berücksichtigung der Kapazität des Energiespeichers eingestellt wird.

Im zweiten Betriebszustand wird der erste Reduzierungsfaktor (kontinuierlich) erhöht und der zweite Reduzierungsfaktor (entsprechend) erhöht. Dabei wird der erste Reduzierungsfaktor soweit erhöht, so dass eine Leistung des elektrisch angetriebenen Verdichters null ist, also außer Betrieb genommen werden kann. Der elektrisch angetriebene Verdichter ist insbesondere dann außer Betrieb, sobald der Ist-Ladedruck den Soll-Ladedruck erreicht. Gleichzeitig wird im zweiten Betriebszustand der zweite Reduzierungsfaktor derart erhöht, dass vorranging der ATL den Ist-Ladedruck aufbaut, ohne dass dabei ein negatives Spülgefälle entsteht. Dadurch wird ein energetisch verbesserter, wenn nicht sogar optimaler, Ladungswechsel und Momentenaufbau ermöglicht.

In Verfahrensvarianten kann/können der erste und/oder der zweite Reduzierungsfaktor in Abhängigkeit eines Spülgefälles, insbesondere ein Ist-Spülgefälle, einer Ventilüberschneidung, der Kapazität des Energiespeichers (,also eines mit dem elektrisch angetriebenen Verdichter gekoppelten Energiespeichers) und/oder eines Zündwinkels ermittelt werden. Mithilfe der Ventilüberschneidung ist eine Öffnungs- und Schließzeit der Eingangs- und Ausgangsventile eines Zylinders zumindest indirekt ermittelbar.

In weiteren Varianten kann das Ermitteln des ersten oder zweiten Reduzierungsfaktors mittels Kennfeldern und/oder Kennlinien erfolgen. Diese können beispielsweise in einem Motorsteuergerät hinterlegt sein und sind daher einfach zugänglich und schnell abrufbar.

Ferner können die Kennfelder und/oder Kennlinien empirisch ermittelbar oder mittels, bspw. mathematischen, Modellen erstellbar sein.

In einer Alternative kann die zweite Stellgröße (für die Stelleinrichtung) größer als eine vorbestimmte Vorsteuerungsstellgröße sein.

In einer Variante kann die Stelleinrichtung des ATLs das oben beschriebene Wastegate umfassen. Dadurch ist, ähnlich wie bei einer VTG, ein Abgasgegendruck und eine Leistung des ATLs besonders gut anpass-/einstellbar.

Nach einem zweiten Aspekt stellt die vorliegende Offenbarung eine Steuerung für einen Verbrennungsmotor bereit, wobei die Steuerung dazu eingerichtet ist, das Verfahren nach einem der vorhergehenden Ansprüche auszuführen.

Nach einem dritten Aspekt stellt die vorliegende Offenbarung einen Verbrennungsmotor mit einem oben erwähnten Aufladungssystem und einer Steuerung nach dem zweiten Aspekt bereit.

Nach einem vierten Aspekt stellt die vorliegende Offenbarung ein Kraftfahrzeug mit einem Verbrennungsmotor nach dem dritten Aspekt bereit.

Ausführungsbeispiele der Erfindung werden nun beispielhaft und unter Bezugnahme auf die beigefügte Zeichnung beschrieben. Dabei zeigt:
- Fig. 1: schematisch ein Ausführungsbeispiel eines Kraftfahrzeugs mit einem Verbrennungsmotor;
- Fig. 2: ein Ermitteln von Stellgrößen für ein Aufladungssystem des Verbrennungsmotors gemäß einer ersten Variante;
- Fig. 3a, b: ein Ermitteln von Stellgrößen für das Aufladungssystem des Verbrennungsmotors gemäß einer zweiten Variante, die nicht Teil der Erfindung ist; und
- Fig. 4: Verläufe von Betriebsparametern des Verbrennungsmotors und des Aufladungssystems.

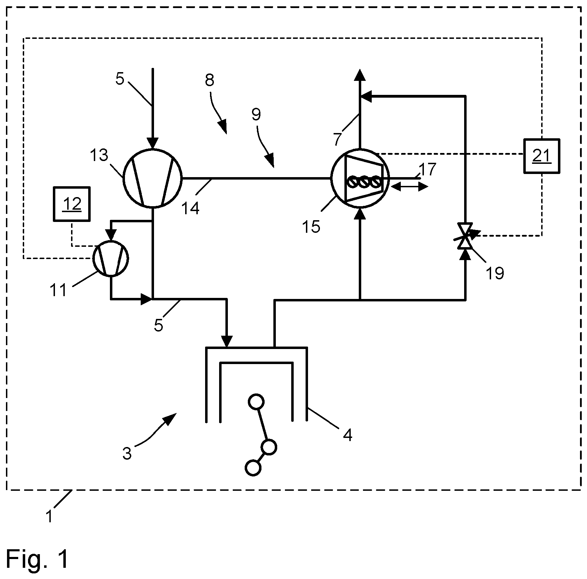

Die Fig. 1 zeigt ein Kraftfahrzeug 1 mit einem Verbrennungsmotor 3 (Verbrennungskraftmaschine) und einem Aufladungssystem 8, das von einer Steuerung 21 gesteuert wird, die bspw. als Motorsteuergerät ausgebildet ist. Das Aufladungssystem 8 umfasst einen Abgasturbolader (ATL) 9 und einen elektrisch angetriebenen Verdichter 11. Ein Energiespeicher 12 ist mit dem elektrisch angetriebenen Verdichter 11 gekoppelt, um diesen mit elektrischer Energie für dessen Betrieb zu versorgen.

Die vorliegende Erfindung ist nicht auf einen bestimmten Motortyp beschränkt, aber insbesondere als Millermotor ausgebildet.

Der Motor 3 umfasst einen oder mehrere Zylinder 4, von denen hier einer dargestellt ist. Der Zylinder 4 wird vom dem Aufladungssystem 8 mit aufgeladener (Verbrennungs-)Luft versorgt. Der ATL 9 umfasst einen Verdichter 13, der über eine Welle 14 von einer Turbine (Abgasturbine) 15 mit variabler Turbinengeometrie (VTG) 17 angetrieben bzw. betrieben wird. Die Turbine 15 ist also über die Welle 14 mit dem Verdichter 13 wirkverbunden/gekoppelt. Der Verdichter 13 ist in einer Luftleitung 5 zum Motor 3 angeordnet und die Turbine 15 in einer Abgasleitung 7, die Abgas aus dem Zylinder 4 abführt. So ist der Verdichter 13 mit dem Abgas des Motors 3 betreibbar, indem die Turbine 15 mit dem Abgas aus dem Motor 3 versorgt und damit angetrieben wird. Ferner ist der ATL 9 mit der Steuerung 21 gekoppelt.

Die VTG 17 ist über einen Verstellmechanismus einstellbar. Alternativ/ergänzend zur VTG 17 kann ein Wastegate 19 vorgesehen werden. Über den Verstellmechanismus (und/oder über das Wastegate 19) ist das der Turbine 15 zugeführte Abgas und entsprechend eine Leistung des Verdichters 13 einstellbar. Optional kann auch ein mehrstufig aufgeladenes Aggregat vorgesehen werden. Anders ausgedrückt, es können auch mehrere ATL 9 vorgesehen sein.

In dem hier gezeigten Beispiel ist der elektrisch angetriebene Verdichter 11 stromabwärts des Verdichters 13 angeordnet und mit der Steuerung 21 gekoppelt. Eine Zuleitung des elektrisch angetriebenen Verdichters 11 zweigt von der Luftleitung 5 ab und eine Ableitung des elektrisch angetriebenen Verdichters 11 mündet stromabwärts des elektrisch angetriebenen Verdichters 11 wieder in die Luftleitung 5 ein. Anders ausgedrückt, der elektrisch angetriebene Verdichter 11 ist in einer Bypassleitung der Luftleitung 5 angeordnet.

Mithilfe einer (nicht gezeigten) entsprechend in der Luftleitung 5 angeordneten Stellanordnung, beispielsweise eine 3-Wege-Regelklappe, kann die Luftzufuhr zum elektrisch angetrieben Verdichter 11 einstellbar sein. So kann stromabwärts des Verdichters 13 die (dem Verbrennungsmotor 3 zugeführte) Luft vollständig über den elektrisch angetriebenen Verdichter 11 geleitet werden. Ferner kann die Stellanordnung derart eingestellt sein, dass die vom Verdichter 13 vorverdichtete Luft nicht durch den elektrisch angetriebenen Verdichter 11 strömt. Auch kann die Stellanordnung eine Luftzufuhr zum Verbrennungsmotor 3 (vollständig) unterbinden, so dass weder die vom elektrisch angetriebenen Verdichters 11 noch vom Verdichter 13 vorverdichtete Luft dem Verbrennungsmotor 2 zuführbar ist. Schließlich kann über die Stellanordnung die dem Verbrennungsmotor 3 zugeführte Luftmenge eingestellt werden. Die Stellanordnung kann also eine Drosselfunktion, wie z.B. bei einer klassischen Drosselklappe, ausführen.

In einer nicht gezeigten Alternative kann der elektrisch angetriebene Verdichter 11 in der Luftleitung 5 auch stromaufwärts des Verdichters 13 angeordnet sein.

In der Luftleitung 5 kann stromabwärts dem Verdichter 13 und dem elektrisch angetriebenen Verdichter 11 ein (nicht gezeigter) Ladeluftkühler angeordnet, der die dem Verbrennungsmotor 3 zugeführte vorverdichtete Luft kühlt.

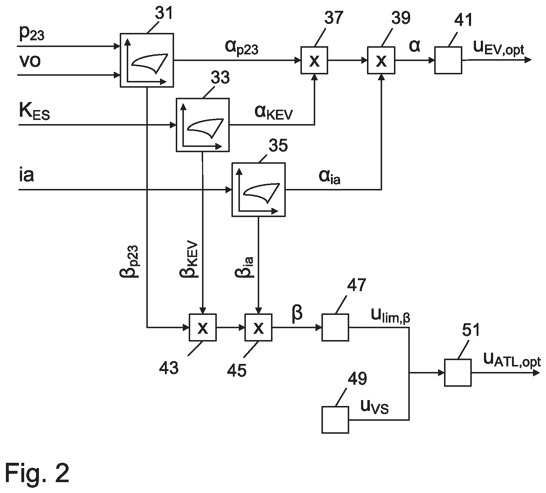

In der Fig. 2 wird schematisch dargestellt, wie eine (Soll-)Stellgröße u_{EV,opt} für den elektrisch angetriebenen Verdichter 11 und eine (Soll-)Stellgröße u_{ATL,opt} für den ATL 9 ermittelt werden. So werden mittels eines Kennfelds 31 ein Reduzierungsteilfaktor αₚ₂₃ für den elektrisch angetrieben Verdichter 11 und ein zweiter Reduzierungsteilfaktor βₚ₂₃ für den ATL 9 ermittelt, die von einem (Ist-)Spülgefälle p₂₃ und von einer Ventilüberschneidung vo abhängig sind. Aus einem Kennfeld 33 werden ein Reduzierungsteilfaktor α_{KEV} für den elektrisch angetrieben Verdichter 11 und ein Reduzierungsteilfaktor β_{KEV} für den ATL 9 ermittelt, die von der Kapazität K_{ES} des Energiespeichers 12 abhängig sind. Ferner werden mittels eines Kennfelds 35 ein Reduzierungsteilfaktor αᵢₐ für den elektrisch angetrieben Verdichter 11 und ein Reduzierungsteilfaktor βᵢₐ für den ATL 9 ermittelt, die von einem Zündwinkel ia abhängig sind.

Im Block 37 werden die Reduzierungsteilfaktoren αₚ₂₃ und α_{KEV} miteinander verrechnet, insbesondere multipliziert. Die aus dem Block 37 hervorgehende Größe wird anschließend im Block 39 mit dem Reduzierungsteilfaktor αᵢₐ verrechnet, insbesondere multipliziert. Dadurch geht ausgangsseitig des Blocks 39 ein Reduzierungsfaktor α für den elektrisch angetriebenen Verdichter 11 hervor. Dieser Reduzierungsfaktor α wird mittels des Blocks 41 in die Stellgröße u_{EV,opt} umgewandelt/-gerechnet. Über die Stellgröße u_{EV,opt} wird eine entsprechende Leistung des elektrisch angetriebenen Verdichters 11 eingestellt, insbesondere dessen Drehzahl.

Wie oben für die Reduzierungsteilfaktoren αₚ₂₃, α_{KEV}, αᵢₐ für den elektrisch angetriebenen Verdichter 11 beschrieben, werden auch die Reduzierungsteilfaktoren βₚ₂₃, β_{KEV}, βᵢₐ für den ATL 9 in entsprechenden Blöcken 43, 45 verrechnet, so dass schließlich ein Reduzierungsfaktor β für den ATL 9 ermittelt wird. Im Block 51 wird der Reduzierungsfaktor β in die reduzierungsfaktorabhängige Stellgröße u_{lim,β} für den ATL 9, also für die VTG 17 und/oder das Wastegate 19, umgewandelt/-gerechnet.

Ferner wird im Block 49 eine Vorsteuerungsstellgröße uᵥₛ ermittelt bzw. vorbestimmt, die die Stellgröße u_{ATL,opt} mindestens erreichen und/oder überschreiten muss. Beispielsweise kann die Vorsteuerungsstellgröße uᵥₛ über die Turboladerhauptgleichung ermittelt werden. Um sicherzustellen, dass die Stellgröße u_{ATL,opt} die Vorsteuerungsstellgröße uᵥₛ erreicht bzw. überschreitet, gehen eingangsseitig am Block 65 die reduzierungsfaktorabhängige Stellgröße u_{lim,β} und die Vorsteuerungsstellgröße uᵥₛ ein. Im Block 51 wird von den beiden Stellgrößen u_{lim,β}, uᵥₛ die größere ausgewählt, die dann ausgangsseitig als Stellgröße u_{ATL} hervorgeht. Sind die beiden Stellgrößen u_{lim,β}, uᵥₛ gleich groß, entspricht u_{ATL,opt} deren Wert. Über die Stellgröße u_{ATL,opt} wird eine entsprechende Leistung des ATLs 9 ein, insbesondere dessen Drehzahl, eingestellt. Das heißt, je größer die Stellgröße u_{ATL,opt} ist, desto höher die Drehzahl des ATLs 9. Mit anderen Worten, je größer die Stellgröße u_{ATL,opt} ist, desto kleiner ist der Strömungsquerschnitt der VTG bzw. weniger Abgas strömt durch das Wastegate 19.

Aus den Kennfelder 31, 33, 35 sind die Reduzierungsteilfaktoren αₚ₂₃, α_{KEV}, αᵢₐ für den elektrisch angetriebenen Verdichter 11 und die Reduzierungsteilfaktoren βₚ₂₃, β_{KEV}, βᵢₐ für den ATL 9 gemeinsam in den entsprechenden Kennfeldern 31, 33, 35 in Abhängigkeit voneinander hinterlegt. Die ermittelten Stellgrößen u_{EV,opt} und u_{ATL,opt} stellen dann den elektrisch angetrieben Verdichter 11 bzw. den ATL 9 derart ein, dass zunächst ein positives Spülgefälle unter Berücksichtigung der Kapazität des Energiespeichers vergleichsweise schnell erreicht wird. Im positiven Spülgefällebereich wird der ATL 9 dann derart betrieben, dass seine Leistung (und daher von dem ATL 9 ausgehende Ladedruckaufbau) so hoch wie möglich ist, ohne dass das Spülgefälle negativ wird, während gleichzeitig der elektrisch angetriebene Verdichter 11 in seiner Leistung zurückgefahren wird und somit auch weniger vom Energiespeicher bereitgestellte Energie verbraucht.

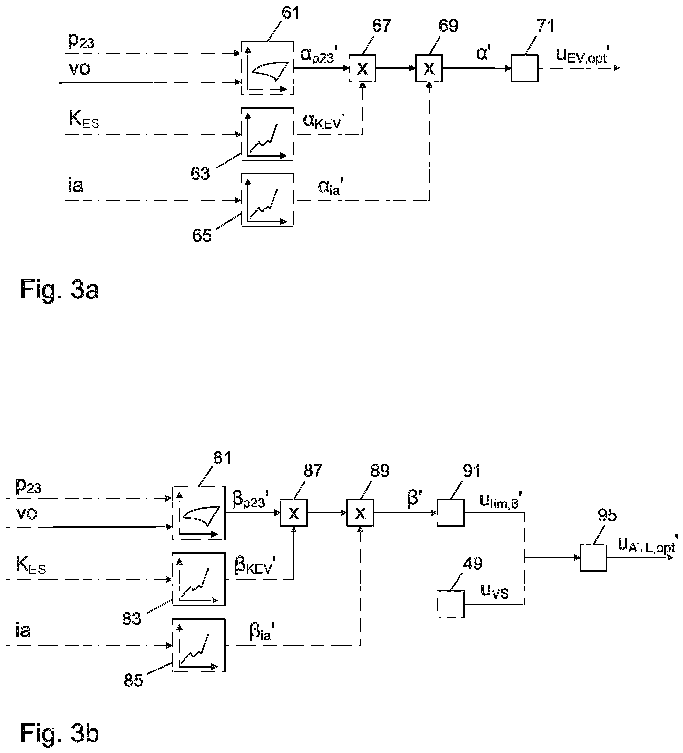

In den Fig. 3a und 3b wird eine Alternative zur Ermittlung von (Soll-)Stellgrößen u_{EV,opt'} für den elektrisch angetriebenen Verdichter 11 und u_{ALT,opt'} für den ATL 9 dargestellt, die nicht Teil der Erfindung ist. Der Unterschied zum Ansatz aus der Fig. 2 besteht darin, dass Reduzierungsteilfaktoren α_{p23'}, α_{KEV'}, αᵢₐ', die den Reduzierungsteilfaktoren α_{p23'}, α_{KEV'}, αᵢₐ' entsprechen, aus einem Kennfeld 61 bzw. Kennlinien 63, 65 ermittelt werden, und die Reduzierungsteilfaktoren βₚ₂₃', β_{KEV}', β_{ia'}, die den Reduzierungsteilfaktoren βₚ₂₃, β_{KEV}, βᵢₐ entsprechen, aus einem Kennfeld 81 bzw. Kennlinien 83, 85.

So wird in der Fig. 3a mittels dem Kennfelds 61 der Reduzierungsteilfaktor αₚ₂₃' für den elektrisch angetrieben Verdichter 11 ermittelt, der von dem (Ist-)Spülgefälle p₂₃ und von der Ventilüberschneidung vo abhängig ist. Aus der Kennlinie 33 wird der von der Kapazität K_{ES} des Energiespeichers 12 abhängige Reduzierungsteilfaktor α_{KEV} ermittelt. Ferner wird mittels der Kennlinie 65 der von dem Zündwinkel ia abhängige Reduzierungsteilfaktor 65 αᵢₐ' ermittelt. Im Block 67 werden die Reduzierungsteilfaktoren αₚ₂₃' und α_{KEV}' miteinander verrechnet, insbesondere multipliziert. Die aus dem Block 67 hervorgehende Größe wird anschließend im Block 69 mit dem Reduzierungsteilfaktor αᵢₐ' verrechnet, insbesondere multipliziert. Dadurch geht ausgangsseitig des Blocks 69 ein Reduzierungsfaktor α' für den elektrisch angetriebenen Verdichter 11 hervor. Dieser Reduzierungsfaktor α' wird mittels des Blocks 71 in die Stellgröße u_{EV,opt'} umgewandelt/-gerechnet. Über die Stellgröße u_{EV,opt}' wird eine entsprechende Leistung des elektrisch angetriebenen Verdichters 11 eingestellt, insbesondere dessen Drehzahl.

Die Fig. 3b stellt schematisch dar, wie die (Soll-)Stellgröße u_{ATL,opt}' für den ATL 9 ermittelt wird, wobei diese Stellgröße u_{ATL,opt}' ähnlich ermittelt wird wie die Stellgröße u_{EV,opt}' für den elektrisch angetriebenen Verdichter 11. Es werden ebenfalls Reduzierungsteilfaktoren βₚ₂₃', β_{KEV}', β_{ia'} ermittelt, die von dem (Ist-)Spülgefälle p₂₃, von der Ventilüberschneidung vo, von der Kapazität K_{ES} bzw. von dem Zündwinkel ia abhängig sind. Ein Kennfeld 81 und Kennlinien 83, 85 sind entsprechend für die Ermittlung der Reduzierungsteilfaktoren βₚ₂₃', β_{KEV}', βᵢₐ' aufgestellt worden. Wie oben beschrieben werden auch die Reduzierungsteilfaktoren βₚ₂₃', β_{KEV}', β_{ia'} in entsprechenden Blöcken 87, 89 verrechnet, insbesondere multipliziert, so dass schließlich ein Reduzierungsfaktor β' für den ATL 9 ermittelt wird. Im Block 91 wird der Reduzierungsfaktor β' in die reduzierungsfaktorabhängige Stellgröße u_{lim,β}' für den ATL 9, also für die VTG 17 und/oder das Wastegate 19, umgewandelt/-gerechnet. Auch hier liegt Block 49 zur Ermittlung der Vorsteuerungsgröße uᵥₛ vor. Entsprechend wie zum Block 51 wird mittels Block 95 sichergestellt, dass von den am Block 95 eingangsseitig vorliegenden Stellgrößen u_{lim,β}', uᵥₛ die größere als Ausgangsgröße u_{ATL,opt}' hervorgeht.

In den Fig. 3a und 3b werden die Stellgrößen u_{EV,opt'}, u_{ATL,opt}' ohne Abhängigkeit voneinander ermittelt. Dieser Ansatz kann zwar den Energiespeicher 12 im Vergleich zu dem Ansatz aus Fig. 2 vergleichsweise höher belasten, jedoch werden die Stellgrößen u_{EV,opt'}, u_{ATL,opt'} besonders einfach ermittelt.

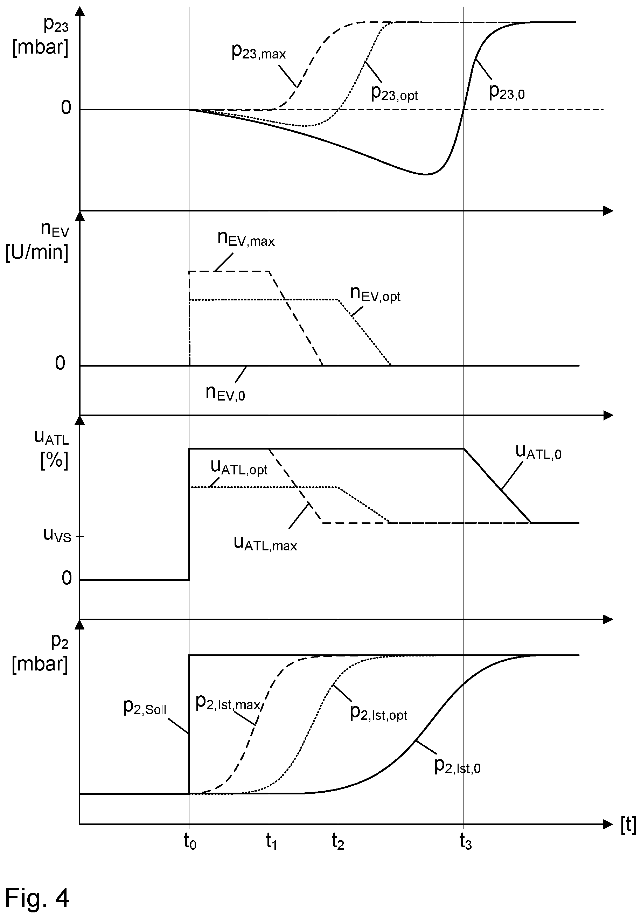

Die Fig. 4 zeigt qualitative und schematische Verläufe für das Spülgefälle p₂₃, für eine Drehzahl n_{EV} des elektrisch angetriebenen Verdichters 11, für die Stellgröße u_{ATL} für den ATL 9 und für den Ladedruck p₂. Die Drehzahl n_{EV} des elektrisch angetriebenen Verdichters 11 ist über die Stellgröße u_{EV} für den elektrisch angetrieben Verdichter 11 einstellbar. Die Drehzahl n_{EV} spiegelt also die Leistung des elektrisch angetriebenen Verdichters 11 wieder. Ein Soll-Ladedruckverlauf p_{2,Soll} ist gezeigt, der zum Umsetzen des Fahrerwunschs bzw. des Motor-Sollmoments erforderlich ist, wobei der Fahrerwunsch zum Zeitpunkt t₀ erfasst wird.

Ferner ist ein Verlauf für ein Spülgefälle p_{23,0} gezeigt, bei dem der elektrisch angetriebene Verdichter 11 nicht betrieben wird. Man sieht, dass das Spülgefälle p_{23,0} einen vergleichsweise hohen Ausschlag in den negativen Bereich aufweist und ein Minimum des Spülgefälles p_{23,0} vergleichsweise zeitlich später vorliegt. Auch ist zu sehen, dass der Verlauf des Spülgefälles P_{23,0} erst zu einem vergleichsweise späten Zeitpunkt t₃ den positiven Bereich erreicht. Das liegt daran, dass ein Ist-Ladedruck p_{2,Ist,0} in diesem Fall nur durch den ATL 9 aufgebaut wird. Dafür wird die Stelleinrichtung 17, 19 (also VTG 17 und/oder Wastegate 19) über eine entsprechende Stellgröße u_{ATL,0} eingestellt, um die Antriebsleistung der Turbine 15 zeitweise zu erhöhen, insbesondere zu maximieren, wodurch der Abgasgegendruck p₃ schlagartig ansteigt. Hingegen wird der Ist-Ladedruck p_{2,lst,0} aufgrund des hohen Abgasgegendrucks p3 vergleichsweise stark verzögert aufgebaut, da der Abgasgegendruck p₃ eine Frischluftfüllung im Zylinder 4 durch zurückdrückendes Abgas reduziert. Daher kommt es zu dem starken Ausschlag des Spülgefälles p_{23,0} in negative Richtung.

Ferner ist ein nicht-optimierter Verlauf p_{23,max} gezeigt, bei dem der elektrisch angetriebene Verdichter 11 nicht optimal, d.h. mit einer nicht-optimierten Drehzahl n_{EV,max} betrieben wird, wodurch er zeitweise mit seiner nicht-optimierten maximalen (Drehzahl-) Leistung läuft. Anders ausgedrückt, der elektrisch angetriebene Verdichter 11 wird mit seiner bauteilabhängigen maximalen Drehzahl betrieben. Ferner wird der ATL 9 mit einer nicht-optimierten Stellgrößen u_{ATL,max} betrieben, mit der der ATL 9 zeitweise auf eine maximal mögliche Soll-Drehzahl eingestellt wird. Die nicht optimierte Stellgröße u_{ATL,max} verläuft bis zum Zeitpunkt t₁ wie die Stellgröße u_{ATL,0}. Durch die nicht-optimierte Stellgröße u_{ATL,max} wird der ATL 9 bzw. die Stelleinrichtung 17 - wie schon bei der Stellgröße u_{ATL,0} - zeitweise in seine Stellgliedgrenze eingestellt. Dadurch werden ein nicht-optimierter Ladedruck p_{2,Ist,max} und entsprechend das positive Spülgefälle p₂₃ zum Zeitpunkt t₁ vergleichsweise schnell aufgebaut, während der Verlauf für das nicht-optimierte Spülgefälle p_{23,max} vor dem Zeitpunkt t₁ einen vergleichsweise geringen Ausschlag in den negative Bereich aufweist. Da der elektrisch angetriebene Verdichter 11 zeitweise mit nicht-optimierten maximaler Leistung betrieben wird, wird auch die von dem Energiespeicher gespeicherte Energie (für den Betrieb des elektrisch angetriebenen Verdichters 2) entsprechend schneller verbraucht.

Ein optimiertes (oder, anders ausgedrückt, ideales) Spülgefälle p_{23,opt} wird eingestellt, indem der elektrisch angetriebene Verdichter 11 mit einer optimierten Drehzahl n_{EV,opt} betrieben wird.

Diese optimierte Drehzahl n_{EV,opt} wird entsprechen dem Reduzierungsfaktor α bzw. der (reduzierungsfaktorbehafteten) Stellgröße u_{EV,opt} eingestellt. Währenddessen wird die Stelleinrichtung 17, 19 mit einer optimierten (ggf. reduzierungsfaktorbehafteten) Stellgröße u_{ATL,opt} betrieben, wobei die Stellgröße u_{ATL,opt} zum Zeitpunkt t₀ größer als der Vorsteuerungsstellwert uᵥₛ ist. Die Stellgröße u_{ATL,opt} verläuft bis zum Zeitpunkt t₀ wie die Stellgröße u_{ATL,0}. Im Vergleich zum Verlauf p_{23,0} weist der optimierte Verlauf für das Spülgefälle p_{23,opt} einen kleineren Ausschlag in einen negativen Spülgefällebereich. Ferner wird das optimierte Spülgefälle p_{23,opt} zu einem früheren Zeitpunkt t₂ positiv und das Spülgefälle p_{23,0} erst zu einem späteren Zeitpunkt t₃.

Es ist ferner zu erkennen, dass die Drehzahl n_{EV} des elektrisch angetriebenen Verdichters 11 durch den optimierten Betrieb n_{EV,opt} (bzw. durch das schnellere Einstellen des positiven Spülgefälles) im Vergleich zu dem Betrieb nicht-optimierten Betrieb n_{EV,max} niedriger ist. Das bedeutet zwar, dass im optimierten Betrieb der optimierte Ist-Ladedruck p_{2,Ist,opt} langsamer als der nicht-optimierte Ist-Ladedruck p_{2,Ist,max} dem Soll-Ladedruck p_{2,Soll} nachgeführt wird. Allerdings wird durch den optimierten Betrieb des elektrischen angetriebenen Verdichters 11 die Kapazität des Energiespeichers berücksichtigt.

In allen Fällen wird die Drehzahl n_{EV} des elektrisch angetriebenen Verdichters 11 und die Stellgröße u_{ATL} für den ATL 9 reduziert, sobald das Spülgefälle p₂₃ den positiven Bereich bis der Ist-Ladedruck p_{2,ist}, insbesondere im Wesentlichen, den Soll-Ladedruck p_{2,Soll} erreicht. Anschließend wird die Stellgröße u_{ATL} für den ATL 9 auf einen entsprechenden Wert für einen stationären Betrieb des Verbrennungsmotors 3 eingestellt und ggf. der elektrisch angetriebene Verdichter 11 außer Betrieb genommen, d.h. seine Drehzahl n_{EV} wird auf null gesetzt.

### Bezugszeichenliste

- 1: Kraftfahrzeug
- 3: Verbrennungsmotor/-kraftmaschine
- 4: Zylinder
- 5: Luftleitung
- 7: Abgasleitung
- 8: Aufladungssystem
- 9: Abgasturbolader
- 11: elektrisch angetriebener Verdichter
- 12: Energiespeicher
- 13: Verdichter
- 15: Turbine
- 17: VTG(-Verstellmechanismus)
- 19: Wastegate
- 21: Steuergerät
- 31, 33, 35 37,39,41, 43: Kennfeld
- 45, 47, 49, 51: Block
- 61: Kennfeld
- 63, 65: Kennlinie
- 67, 69, 71: Block
- 81: Kennfeld
- 83, 83 87, 89, 91,: Kennlinie
- 95: Block
- α, α': erster Reduzierungsfaktor
- αᵢₐ, αᵢₐ': Teilreduzierungsfaktor (Zündwinkel)
- α_{KEV}, α_{KEV}': Teilreduzierungsfaktor (Kapazität elektrisch angetriebener Verdichter)
- αₚ₂₃, αₚ₂₃': Teilreduzierungsfaktor (Spülgefälle)
- β, β': erster Reduzierungsfaktor
- βᵢₐ, βᵢₐ': Teilreduzierungsfaktor (Zündwinkel)
- β_{KEV}, β_{KEV}': Teilreduzierungsfaktor (in Abhängigkeit der Kapazität des Energiespeichers)
- βₚ₂₃, βₚ₂₃': Teilreduzierungsfaktor (Spülgefälle)
- K_{ES}: Kapazität des Energiespeichers
- n_{EV,opt}: optimierte Drehzahl des elektrisch angetriebenen Verdichters
- n_{EV,max}: nicht-optimierte Drehzahl des elektrisch angetriebenen Verdichters
- p_{2,Soll}: Soll-Ladedruck
- P_{2,Ist,opt}: optimierter Ist-Ladedruck
- P_{23,Ist,max}: nicht- optimierter Ist-Ladedruck
- P_{23,opt}: optimiertes Spülgefälle
- P_{23,max}: nicht-optimiertes Spülgefälle
- u_{ATL,opt}, U_{ATL,opt}': optimierte (zweite) Stellgröße für ATL
- U_{EV,opt}, u_{EV,opt'}: optimierte Stellgröße für elektrisch angetriebenen Verdichter
- u_{ATL,max}: nicht optimierte (zweite) Stellgröße für ATL

## Patentansprüche

1. Verfahren zum Betreiben eines Verbrennungsmotors (3) mit einem Aufladungssystem (8), das einen Abgasturbolader (ATL) (9) und einen elektrisch angetriebenen Verdichter (11) aufweist, wobei eine Leistung des ATLs (9) über eine Stelleinrichtung (17,19) einstellbar ist, die Öffnungs- und Schließzeiten von Eingangs- und Ausgangsventilen eines Zylinders (4) des Verbrennungsmotors eine Ventilüberschneidung (vo) aufweisen und wobei die Stelleinrichtung (17, 19) eine variable Turbinengeometrie (17) und/oder ein Wastegate (19) umfasst, wobei das Verfahren die folgenden Schritte umfasst:
- Ermitteln eines Soll-Ladedrucks (p_{2,soll}) zum Erreichen eines erhöhten Motor-Sollmoments;
- Betreiben des elektrisch angetriebenen Verdichters (11) und der Stelleinrichtung (17, 19) in Abhängigkeit voneinander, um einen Ist-Ladedruck (P_{2,ist}) gemäß dem Soll-Ladedruck (P_{2,Soll}) und einem zu erreichenden positiven Spülgefälle (p₂₃) aufzubauen; **dadurch gekennzeichnet, dass** das Verfahren ferner die folgenden Schritte umfasst:
- Ermitteln einer Kapazität (K_{EV}) der versorgenden Batterie (12);
- Ermitteln einer optimierten Stellgröße (U_{ATL,opt}) für die Stelleinrichtung (17, 19) in einem ersten Betriebszustand in Abhängigkeit mindestens des zu erreichenden positiven Spülgefälles (p₂₃) und der Kapazität (K_{EV}) der versorgenden Batterie (12); und
- Ermitteln einer optimierten Stellgröße (U_{EV,opt}) für den elektrisch angetriebenen Verdichter (11) in dem ersten Betriebszustand in Abhängigkeit mindestens des zu erreichenden positiven Spülgefälles (p₂₃) und der ermittelten Kapazität (K_{EV}) der versorgenden Batterie (12),
wobei das Ermitteln der optimierten Stellgröße (U_{ATL,opt}) für die Stelleinrichtung (17,19) und der optimierten Stellgröße (U_{EV,opt}) für den elektrisch angetriebenen Verdichter (11) basierend auf gemeinsamen Kennfeldern und/oder Kennlinien (31, 33) erfolgt, um den elektrisch angetriebenen Verdichter (11) und die Stelleinrichtung (17, 19) in Abhängigkeit voneinander zu betreiben.

2. Verfahren nach Anspruch 1, wobei im ersten Betriebszustand beim Erreichen des positiven Spülgefälles (p₂₃) in einem zweiten Betriebszustand eine Leistung des ATLs (9) zum Aufbauen des Ist-Ladedrucks (p_{2,ist}) und entsprechend die Leistung des elektrisch angetriebenen Verdichters (11) reduziert wird.

3. Verfahren nach Anspruch 1, wobei die optimierte Stellgröße (U_{EV,opt}) für den elektrisch angetriebenen Verdichter (11) anhand eines ersten Reduzierungsfaktors (α) ermittelbar ist Änderungsversion
und die optimierte Stellgröße (U_{ATL,opt}, U_{ATL,opt'}) für die Stelleinrichtung (17, 19) anhand eines zweiten Reduzierungsfaktors (β).

4. Verfahren nach Anspruch 3, wobei der erste und/oder der zweite Reduzierungsfaktor (α, β) in Abhängigkeit des zu erreichenden Spülgefälles (p₂₃), der Ventilüberschneidung (vo), der Kapazität (K_{EV}) der zu versorgenden Batterie (12) und eines optionalen Zündwinkels (ia) ermittelt werden.

5. Verfahren nach Anspruch 4, wobei das Ermitteln des ersten und des zweiten Reduzierungsfaktors (α, β) mittels Kennfeldern und/oder Kennlinien erfolgt.

6. Verfahren nach Anspruch 5, wobei die Kennfelder und/oder Kennlinien empirisch ermittelbar oder mittels Modellen erstellbar sind.

7. Verfahren nach einem der Ansprüche 1 bis 6, wobei die optimierte Stellgröße (U_{ATL,opt}, U_{ATL,opt'}) für die Stelleinrichtung (17, 19) größer als eine vorbestimmte Vorsteuerungsstellgröße (u_{VS}) ist.

8. Motorsteuergerät für einen Verbrennungsmotor (3), wobei das Motorsteuergerät dazu eingerichtet ist, das Verfahren nach einem der vorhergehenden Ansprüche auszuführen.

9. Verbrennungsmotor (3) mit einem Aufladungssystem (8), die einen Abgasturbolader, ATL, (9) und einen elektrisch angetriebenen Verdichter (11) aufweist, wobei eine Leistung des ATLs (9) über eine Stelleinrichtung (17,19) einstellbar ist, die Öffnungs- und Schließzeiten von Eingangs- und Ausgangsventilen eines Zylinders (4) des Verbrennungsmotors (3) eine Ventilüberschneidung (vo) aufweisen, die Stelleinrichtung (17, 19) eine variable Turbinengeometrie (17) und/oder ein Wastegate (19) umfasst, und der Verbrennungsmotor (3) durch eine Batterie (12) versorgt wird, und einem Motorsteuergerät nach Anspruch 8.

10. Kraftfahrzeug (1) mit einem Verbrennungsmotor (3) nach Anspruch 9 und einer den Verbrennungsmotor (3) versorgenden Batterie (12).

## Claims

1. Method for operating an internal combustion engine (3) having a supercharging system (8) that has an exhaust-gas turbocharger (ATL) (9) and an electrically driven compressor (11), wherein an output of the exhaust-gas turbocharger (9) can be adjusted by means of an actuating device (17, 19), the opening and closing times of input and output valves of a cylinder (4) of the internal combustion engine exhibit a valve overlap (vo) and wherein the actuating device (17, 19) comprises a variable turbine geometry (17) and/or a wastegate (19), wherein the method comprises the following steps:
- determining a setpoint boost pressure (p_{2,set}) for achieving an increased engine setpoint torque;
- operating the electrically driven compressor (11) and the actuating device (17, 19) depending on each other in order to build up an actual boost pressure (P_{2,act}) in accordance with the setpoint boost pressure (P_{2, set}) and a positive scavenging gradient (p₂₃) to be achieved; **characterized in that** the method further comprises the following steps:
- determining a capacity (K_{ES}) of the power-supplying battery (12);
- determining an optimized actuating variable (U_{ATL,opt}) for the actuating device (17, 19) in a first operating state depending on at least the positive scavenging gradient (p₂₃) to be achieved and the capacity (K_{ES}) of the power-supplying battery (12); and
- determining an optimized actuating variable (U_{EV,opt}) for the electrically driven compressor (11) in the first operating state depending on at least the positive scavenging gradient (p₂₃) to be achieved and the determined capacity (K_{ES}) of the power-supplying battery (12),
wherein the optimized actuating variable (U_{ATL,opt}) for the actuating device (17, 19) and the optimized actuating variable (U_{EV,opt}) for the electrically driven compressor (11) are determined based on common characteristic maps and/or characteristic curves (31, 33) in order to operate the electrically driven compressor (11) and the actuating device (17, 19) depending on each other.

2. Method according to Claim 1, wherein, in the first operating state when the positive scavenging gradient (p₂₃) is achieved, in a second operating state an output of the exhaust-gas turbocharger (9) for building up the actual boost pressure (p_{2,act}) and accordingly the output of the electrically driven compressor (11) are reduced.

3. Method according to Claim 1, wherein the optimized actuating variable (U_{EV,opt}) for the electrically driven compressor (11) can be determined on the basis of a first reduction factor (α) and the optimized actuating variable (U_{ATL, opt}, U_{ATL,opt'}) for the actuating device (17, 19) can be determined on the basis of a second reduction factor (β).

4. Method according to Claim 3, wherein the first and/or the second reduction factor (α, β) are/is determined depending on the scavenging gradient (p₂₃) to be achieved, the valve overlap (vo), the capacity (K_{EV}) of the power-supplying battery (12) and an optional ignition angle (ia).

5. Method according to Claim 4, wherein the first and the second reduction factor (α, β) are determined by means of characteristic maps and/or characteristic curves.

6. Method according to Claim 5, wherein the characteristic maps and/or characteristic curves can be empirically determined or created by means of models.

7. Method according to any of Claims 1 to 6, wherein the optimized actuating variable (U_{ATL,opt}, U_{ATL,opt'}) for the actuating device (17, 19) is greater than a predetermined pilot control actuating variable (u_{VS}).

8. Engine controller for an internal combustion engine (3), wherein the engine controller is configured to execute the method according to any of the preceding claims.

9. Internal combustion engine (3) having a supercharging system (8) that has an exhaust-gas turbocharger, ATL, (9) and an electrically driven compressor (11), wherein an output of the exhaust-gas turbocharger (9) can be adjusted by means of an actuating device (17, 19), the opening and closing times of input and output valves of a cylinder (4) of the internal combustion engine (3) exhibit a valve overlap (vo), the actuating device (17, 19) comprises a variable turbine geometry (17) and/or a wastegate (19), and the internal combustion engine (3) is supplied with power by a battery (12), and an engine controller according to Claim 8.

10. Motor vehicle (1) having an internal combustion engine (3) according to Claim 9 and a battery (12) supplying power to the internal combustion engine (3).

## Revendications

1. Procédé de fonctionnement d'un moteur à combustion interne (3) doté d'un système de suralimentation (8) qui comprend un turbocompresseur à gaz d'échappement (ATL) (9) et un compresseur alimenté électriquement (11), une puissance de l'ATL (9) étant réglable par l'intermédiaire d'un dispositif de réglage (17, 19), les temps d'ouverture et de fermeture des soupapes d'admission et d'échappement d'un cylindre (4) du moteur à combustion interne présentant un chevauchement des soupapes (vo) et le dispositif de réglage (17, 19) comprenant une géométrie de turbine variable (17) et/ou une soupape de décharge (19), le procédé comprenant les étapes suivantes :
- la détermination d'une pression de suralimentation de consigne (p_{2,soll}) pour atteindre un couple moteur de consigne élevé ;
- le fonctionnement du compresseur alimenté électriquement (11) et du dispositif de réglage (17, 19) en fonction l'un de l'autre, pour établir une pression de suralimentation réelle (p_{2,ist}) conformément à la pression de suralimentation de consigne (P_{2,soll}) et à une différence de pression de balayage positive (P₂₃) à atteindre ;
**caractérisé en ce que** le procédé comprend en outre les étapes suivantes :
- la détermination d'une capacité (K_{ES}) de la batterie d'alimentation (12) ;
- la détermination d'une grandeur de réglage optimisée (U_{ATL,opt}) pour le dispositif de réglage (17, 19) dans un premier état de fonctionnement en fonction au moins de la différence de pression de balayage positive (p₂₃) à atteindre et de la capacité (K_{ES}) de la batterie d'alimentation (12) ; et
- la détermination d'une grandeur de réglage optimisée (U_{EV,opt}) pour le compresseur alimenté électriquement (11) dans le premier état de fonctionnement en fonction au moins de la différence de pression de balayage positive (P₂₃) à atteindre et de la capacité (K_{ES}) déterminée de la batterie d'alimentation (12),
la détermination de la grandeur de réglage optimisée (U_{ATL,opt}) pour le dispositif de réglage (17, 19) et de la grandeur de réglage optimisée (U_{EV,opt}) pour le compresseur alimenté électriquement (11) s'effectuant sur la base de diagrammes caractéristiques et/ou de courbes caractéristiques (31, 33) communs, afin de faire fonctionner le compresseur alimenté électriquement (11) et le dispositif de réglage (17, 19) en fonction l'un de l'autre.

2. Procédé selon la revendication 1, dans lequel, dans le premier état de fonctionnement, lorsque la différence de pression de balayage positive (p₂₃) est atteinte, la puissance de l'ATL (9) pour établir la pression de suralimentation réelle (p_{2,ist}) et, en conséquence, la puissance du compresseur alimenté électriquement (11) sont réduites dans un deuxième état de fonctionnement.

3. Procédé selon la revendication 1, dans lequel la grandeur de réglage optimisée (U_{EV,opt}) pour le compresseur alimenté électriquement (11) peut être déterminée à l'aide d'un premier facteur de réduction (α) et la grandeur de réglage optimisée (U_{ATL,opt}, U_{ATL,opt'}) pour le dispositif de réglage (17, 19) peut être déterminée à l'aide d'un deuxième facteur de réduction (β).

4. Procédé selon la revendication 3, dans lequel le premier et/ou le deuxième facteur de réduction (α, β) sont déterminés en fonction de la différence de pression de balayage (P₂₃) à atteindre, du chevauchement des soupapes (vo), de la capacité (K_{ES}) de la batterie (12) à alimenter et d'un angle d'allumage (ia) optionnel.

5. Procédé selon la revendication 4, dans lequel la détermination du premier et du deuxième facteur de réduction (α,β) s'effectue au moyen de diagrammes caractéristiques et/ou de courbes caractéristiques.

6. Procédé selon la revendication 5, dans lequel les diagrammes caractéristiques et/ou les courbes caractéristiques peuvent être déterminés empiriquement ou créés au moyen de modèles.

7. Procédé selon l'une des revendications 1 à 6, dans lequel la grandeur de réglage optimisée (U_{ATL,opt}, U_{ATL,opt'}) pour le dispositif de réglage (17, 19) est supérieure à une grandeur de réglage pilote (u_{VS}) prédéterminée.

8. Appareil de commande de moteur destiné à un moteur à combustion interne (3), ledit appareil de commande de moteur étant conçu pour mettre en œuvre le procédé selon l'une des revendications précédentes.

9. Moteur à combustion interne (3) doté d'un système de suralimentation (8) qui comprend un turbocompresseur à gaz d'échappement (ATL) (9) et un compresseur alimenté électriquement (11), une puissance de l'ATL (9) étant réglable par l'intermédiaire d'un dispositif de réglage (17, 19), les temps d'ouverture et de fermeture des soupapes d'admission et d'échappement d'un cylindre (4) du moteur à combustion interne (3) présentant un chevauchement des soupapes (vo), le dispositif de réglage (17, 19) comprenant une géométrie de turbine variable (17) et/ou une soupape de décharge (19), et le moteur à combustion interne (3) étant alimenté par une batterie (12), et doté d'un appareil de commande de moteur selon la revendication 8.

10. Véhicule à moteur (1) doté d'un moteur à combustion interne (3) selon la revendication 9 et d'une batterie (12) alimentant le moteur à combustion interne (3).
